# EUROPEAN PATENT APPLICATION

(11) **EP 4 518 373 A1**
(43) Date of publication of application: **05.03.2025**
(21) Application number: 23795031.6
(22) Date of filing: 12.04.2023
(51) Int. Cl.: H04W 4/44, H04W 4/46, G08G 1/0967

(54) **INFORMATION TRANSMISSION METHOD AND APPARATUS, AND VEHICLE AND INTERNET-OF-VEHICLES DEVICE**

(30) Priority: 25.04.2022 CN 202210442527
(71) Applicant: CICT Connected and Intelligent Technologies Co., Ltd., Chongqing 400041 (CN)
(72) Inventor: ZHANG, Xueyan, Chongqing 400000 (CN)
(74) Representative: dompatent von Kreisler Selting Werner - Partnerschaft von Patent- und Rechtsanwälten mbB
(86) International application number: PCT/CN2023/087843
(87) International publication number: WO 2023/207598

(57) **Abstract**

An information transmission method, an apparatus, a vehicle and a V2X device are provided, and relates to the field of V2X technology. The method is applied to a first vehicle, and the method includes: sending a first message to a V2X device, where the first message includes at least one of the following: a passing priority level; first information related to the passing priority level.

## Description

### CROSS REFERENCE OF RELATED APPLICATION

The present disclosure claims a priority of Chinese patent disclosure No. 202210442527.4 filed on April 25, 2022, which is incorporated herein by reference in its entirety.

### TECHNICAL FIELD

The present disclosure relates to the technical field of V2X (vehicle to everything), and in particular to an information transmission method, an apparatus, a vehicle and a V2X device.

### BACKGROUND

With the rapid development of V2X technology, the market size of vehicles equipped with intelligent connected functions continues to expand. Domestic and foreign standard organizations have formulated a wealth of application scenario standards. The application scenarios of the first stage are mainly for status sharing, that is, the vehicle shares its real-time status information with surrounding devices, mainly for broadcast applications, and no interaction is required; the application scenarios of the second stage are mainly for intention sharing and vehicle-road collaboration. The vehicle not only sends real-time status information, but also sends its own intention information, and then can request collaboration with surrounding vehicles or roadside equipment.

However, when conducting vehicle-road collaboration, the surrounding vehicles or roadside equipment mainly consider the vehicle's passing priority when deciding whether to collaborate. The vehicle's passing priority is mainly based on traffic rules in related technologies. This algorithm cannot solve the game problem of vehicles with the same passing priority, nor can it solve the problem of bad user experience when vehicles with lower passing priority cannot complete driving tasks for a long time.

### SUMMARY

The purpose of the present disclosure is to provide an information transmission method, an apparatus, a vehicle and a V2X device, so as to solve the problem that the game problem of vehicles with the same passing priority is not taken into account in the vehicle-road cooperation process in the related technology, and the problem that vehicles with lower passing priority cannot complete driving tasks for a long time.

In a first aspect, an information transmission method is provide in an embodiment of the present disclosure, to achieve the above object, applied to a first vehicle, including:
sending a first message to a V2X device, where the first message includes at least one of the following:
a passing priority level;
first information related to the passing priority level.

Optionally, the sending the first message to the V2X device includes:
when the first vehicle requires a vehicle collaboration, sending the first message to the V2X device.

Optionally, the first information includes at least one of the following:
a vehicle type of the first vehicle;
information related to collaboration request;
identity information of the V2X device.

Optionally, the information related to the collaboration request includes at least one of the following:
waiting time for collaboration request;
a number of rejected collaboration request;
a purpose of coordination request;
a relationship between path planning and collaboration request;
a location where a collaboration request is initiated;
abnormal condition of vehicle.

Optionally, subsequent to the sending the first message to the V2X device when the first vehicle requires vehicle collaboration, the method further includes:
receiving a passing priority strategy sent by the V2X device, where the passing priority strategy includes at least one of the following:
an approval;
a rejection;
second information representing approval;
third information representing rejection.

Optionally, subsequent to the receiving the passing priority strategy sent by the V2X device, the method further includes:
sending a second message to the V2X device, where the second message includes at least one of the following:
indication information, configured to indicate that the passing priority strategy is received by the first vehicle;
an action that the first vehicle is about to perform.

Optionally, subsequent to the receiving the passing priority strategy sent by the V2X device, the method further includes:
in a case that the passing priority strategy includes the rejection and/or the third information, performing any one of the following operations:
sending updated first message;
stopping sending the first message.

Optionally, the sending the updated first message includes:
sending the updated first message at a first time, where the first time is spaced from a current time by a first duration.

Optionally, prior to the sending the updated first message, the method further includes:
determining a V2X device for receiving the updated first message;
the sending the updated first message includes:
   sending the updated first message to the V2X device for receiving the updated first message.

In a second aspect, an information transmission method is provided in an embodiment of the present disclosure, applied to a V2X device, including:
receiving a first message sent by a first vehicle, where the first message includes a passing priority level and/or first information related to the passing priority level.

Optionally, the first information includes at least one of the following:
a vehicle type of the first vehicle;
information related to collaboration request;
identity information of the V2X device.

Optionally, the information related to the collaboration request includes at least one of the following:
waiting time for collaboration request;
a number of rejected collaboration request;
a purpose of coordination request;
a relationship between path planning and collaboration request;
a location where a collaboration request is initiated;
abnormal condition of vehicle.

Optionally, the V2X device has a connected function and supports a collaboration function, the method further includes:
sending a passing priority strategy to the first vehicle according to the first message, where the passing priority strategy includes at least one of an approval, a rejection, second information representing approval, third information representing rejection.

Optionally, the method further includes:
in a case that the V2X device is a third-party device and the passing priority strategy includes the approval and/or the second information, sending a third message to a second vehicle to enable the second vehicle to assist the first vehicle in passing according to the third message.

Optionally, the method further includes:
in a case that the first messages sent by a plurality of the first vehicles are received, determining the passing priority level of each corresponding first vehicle according to each of the first messages;
sorting the passing priority levels of the first vehicles according to a preset rule;
the sending the passing priority strategy to the first vehicle according to the first message includes:
   sending the corresponding passing priority strategy to each of the first vehicles in turn, according to an arrangement order of the passing priority levels of the first vehicles.

Optionally, prior to the sending the passing priority strategy to the first vehicle according to the first message, the method further includes:
determining the passing priority level of the first vehicle according to the first message;
determining a passing priority level of a third vehicle, the third vehicle being a vehicle assisting the first vehicle in passing;
determining the passing priority strategy according to the passing priority level of the first vehicle and/or the passing priority level of the third vehicle.

In a third aspect, a vehicle is provided in the embodiment of the present disclosure, including a transceiver, a memory, a processor, and a program or instruction stored in the memory and running on the processor, where the processor executes the program or instruction to perform the information transmission method in the first aspect.

In a fourth aspect, a V2X device is provided in the embodiment of the present disclosure, including a transceiver, a memory, a processor, and a program or instruction stored in the memory and running on the processor, where the processor executes the program or instruction to perform the information transmission method in the second aspect.

In a fifth aspect, an information transmission apparatus is provided in the embodiment of the present disclosure, applied to a first vehicle, including:
a sending module, configured to send a first message to a V2X device, where the first message includes at least one of the following:
a passing priority level;
first information related to the passing priority level.

In a sixth aspect, an information transmission apparatus is provided in the embodiment of the present disclosure, applied to a V2X device, including:
a receiving module, configured to receive a first message sent by a first vehicle, where the first message includes a passing priority level and/or first information related to the passing priority level.

In a seventh aspect, a readable storage medium, storing a program is provided in the embodiment of the present disclosure, where when the program is executed by a processor to perform the information transmission method in the first aspect or the information transmission method in the second aspect.

The present disclosure has at least the following beneficial effects:
according to the information transmission method in the present disclosure, the first vehicle sends a first message including the passing priority level and /or first information related to the passing priority level to the V2X device, it is able to enable the V2X device to make decisions based on the passing priority level of the first vehicle, thereby avoiding the game of vehicles with the same passing priority, solving the problem that vehicles with lower passing priority cannot complete driving tasks for a long time, and thus improving the user's driving experience.

### BRIEF DESCRIPTION OF THE DRAWINGS

FIG. 1 is a schematic diagram of a flow chart of an information transmission method according to an embodiment of the present disclosure;
FIG.2 is a second flow chart of the information transmission method according to an embodiment of the present disclosure;
FIG.3 is a schematic diagram of a structure of an information transmission device according to an embodiment of the present disclosure;
FIG.4 is a second structural diagram of the information transmission device according to an embodiment of the present disclosure; and
FIG.5 is a schematic structural diagram of a vehicle according to an embodiment of the present disclosure

### DETAILED DESCRIPTION

In order to make the technical problems, technical solutions and advantages to be solved by the present disclosure clearer, the following will be described in detail with reference to the accompanying drawings and specific embodiments. In the following description, specific details such as specific configurations and components are provided only to help fully understand the embodiments of the present disclosure. Therefore, it should be clear to those skilled in the art that various changes and modifications can be made to the embodiments described herein without departing from the scope and spirit of the present disclosure. In addition, for clarity and brevity, the description of known functions and structures is omitted.

It should be understood that the references to "one embodiment" or "an embodiment" throughout the specification mean that the specific features, structures, or characteristics associated with the embodiment are included in at least one embodiment of the present disclosure. Therefore, the references to "in one embodiment" or "in an embodiment" appearing throughout the specification do not necessarily refer to the same embodiment. In addition, these specific features, structures, or characteristics may be combined in any suitable manner in one or more embodiments.

In various embodiments of the present disclosure, it should be understood that the sequence numbers of the following processes do not imply the order of execution, and the execution order of each process should be determined by its function and internal logic, and should not constitute any limitation on the implementation process of the embodiments of the present disclosure.

In the embodiments provided in the present disclosure, it should be understood that "B corresponding to A" means that B is associated with A, and B can be determined according to A. However, it should also be understood that determining B according to A does not mean determining B only according to A, and B can also be determined according to A and / or other information.

When describing the embodiments of the present disclosure, the technologies or problems related to the embodiments of the present disclosure are first described:
1. Vehicle game problems:
If autonomous vehicles and manually driven vehicles are mixed, in order to ensure safety, autonomous vehicles mostly adopt strategies such as parking, yielding and lane keeping, which leads to low traffic efficiency; if autonomous vehicles meet in certain scenarios or road conditions, the two vehicles may spend a long time in the decision-making process due to game problems, and may even have to choose to stop in the end. Taking the cooperative vehicle merging scenario as an example, if a manually driven vehicle meets an autonomous vehicle, if there is a risk of collision between the two vehicles, the autonomous vehicle generally decides to slow down and yield; if an autonomous vehicle meets an autonomous vehicle and there is a risk of collision between the two vehicles, the two vehicles may decide at the same time to slow down and yield, which may result in the risk of collision still not being eliminated, affecting traffic efficiency.
2. Examples of long waits leading to bad user experience:
Ramp vehicles merge into the main road, and the passing priority of the main road vehicles is higher than that of the ramp vehicles. If the density of vehicles on the main road is high, even if there is only one vehicle on the ramp, it may need to wait for a long time before merging into the main road. If the passing priority of vehicles is determined based on the queue lengths of the main road and ramp vehicles, when the density of vehicles on the main road is high, the queue length of ramp vehicles may always be lower than that of main road vehicles. In this case, ramp vehicles can merge into the main road quickly, but the main road vehicles need to continue to yield to ramp vehicles, which is contrary to the principle that the passing priority of main road vehicles is higher than that of ramp vehicles, affecting the traffic efficiency and user experience of main road vehicles.
3. Research on the decision-making of longitudinal driving behavior of autonomous vehicles is relatively mature, such as the control of longitudinal speed and acceleration, such as forward collision warning, emergency braking warning, abnormal vehicle warning, control lost warning, hazardous location warning, speed limit warning, signal violation warning, etc. in the first stage scenario in Table 1; however, in-depth research is still needed on the decision-making of lateral driving behavior, such as lane changing, cooperative merging, intersection passing, etc., such as cooperative lane changing, cooperative vehicle merging, cooperative intersection passing, etc. in the second stage scenario in Table 1.

**Table 1 List of Phase I and Phase II application scenarios**

| Stage | Serial number | category | Main communication method | Application Name |
|---|---|---|---|---|
| Phase 1 | 1 | Safety | Vehicle - to - Vehicle (V2V) | Forward Collision Warning |
| | 2 | | V2V/ Vehicles -to-Roadside Infrastructure (V2I) | Intersection Collision Warning |
| | 3 | | V2V/V2I | Left turn assistant |
| | 4 | | V2V | Blind spot warning/lane change warning |
| | 5 | | V2V | Do not pass warning |
| | 6 | | V2V- Event | Emergency brake warning |
| | 7 | | V2V-Event | Abnormal vehicle warning |
| | 8 | | V2V-Event | Control lost warning |
| | 9 | | V2I | Hazardous location warning |
| | 10 | | V2I | Speed limit warning |
| | 11 | | V2I | Signal violation warning |
| | 12 | | Vehicle to Pedestrian (V2P) / V2I | Vulnerable road user collision warning |
| | 13 | efficiency | V2I | Green light optimal speed advisory |
| | 14 | | V2I | In-vehicle signage |
| | 15 | | V2I | Traffic jam warning |
| | 16 | | V2V | Emergency vehicle warning |
| | 17 | Information Services | V2I | Vehicle near-field payment |
| Phase 2 | 1 | Safety | V2V/V2I | Sensor data sharing |
| | 2 | Safety | V2V/V2I | Cooperative Lane Change |
| | 3 | Safety/efficiency | V2I | Cooperative Vehicle Merge |
| | 4 | Safety/efficiency | V2I | Cooperative intersection passing |
| | 5 | Information Services | V2I | Differential Data Service |
| | 6 | Efficiency/Traffic Management | V2I | Dynamic Lane Management |
| | 7 | efficiency | V2I | Cooperative high priority vehicle passing |
| | 8 | Information Services | V2I | Guidance service in parking area |
| | 9 | Traffic Management | V2I | Probe data collection |
| | 10 | Safety | Pedestrian to everything (P2X) | Vulnerable road user safe passing |
| | 11 | Advanced Intelligent Driving | V2V | Collaborative platooning management |
| | 12 | Efficiency/Information Services | V2I | Road tolling service |

The lateral driving behavior solution in related technologies mainly assists the vehicle in making decisions by collecting the dynamic driving parameters (speed, acceleration, etc.) of surrounding vehicles and predicting the driving trajectories of surrounding vehicles. There are two main types of solutions:

### Solution 1: Roadside Assist Implementation

The Road Side Unit (RSU) senses the surrounding vehicle information and sends the decision to the relevant vehicles. For example, when autonomous vehicle A sends a lane change request, the RSU determines that it will affect autonomous vehicle B and requires vehicle B to yield. Then the RSU sends the decision information to vehicles A and B, and vehicles A and B drive according to the decision result.

### Solution 2: Vehicle Collaborative Decision-Making

Autonomous driving vehicle A sends a lane change request. There is an autonomous driving vehicle B nearby. After receiving the lane change request from vehicle A, vehicle B decides whether to yield based on the information it can currently obtain about the surrounding vehicles, mainly including the real-time driving information of the vehicles (speed, position, etc.) and the basic attribute information of the vehicles (such as size, vehicle type, etc.). It then informs vehicle A of the decision result.

The above two solutions can solve the passing priority strategy of autonomous vehicles in scenarios such as lane changes, merging entrances, and intersections to a certain extent, but they cannot solve the game problems and user experience issues in specific scenarios.

For example, Solution 1 can solve the game problem through collaborative decision-making of roadside equipment, that is, the autonomous vehicle can clearly know the order of passing, but this decision may affect the user experience of some vehicles. Solution 2 Vehicle collaborative decision-making, on the one hand, the data in the relevant technology cannot support the autonomous vehicle to make a general decision on whether to yield (if it is based on the distance to the vehicle in front, it is very likely to sacrifice the vehicle's own traffic efficiency); on the other hand, the standards in the relevant technology only stipulate the message sent after the vehicle decides to cooperate, but do not stipulate under what circumstances cooperation is required. The vehicle requesting cooperation from other vehicles may not get the collaborative support of surrounding vehicles for a long time, affecting the user experience.

The information transmission method, the apparatus, the vehicle and the V2X device provided by the embodiments of the present disclosure are described in detail below with reference to the accompanying drawings through specific embodiments and their application scenarios.

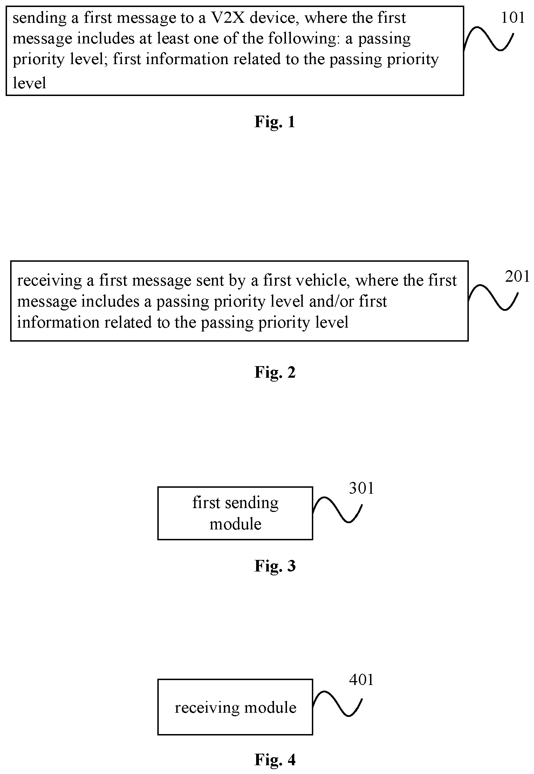

FIG. 1, it is a flow chart of an information transmission method according to an embodiment of the present disclosure. The method is applied to a first vehicle and includes:
Step 101: sending a first message to a V2X device, where the first message includes at least one of the following:
a passing priority level;
first information related to the passing priority level.

Here, it should be noted that the first vehicle may send the first message periodically, or send the first message based on a specific scenario or specific situation. Here, there is no specific limitation on the timing of sending the first message.

Here, it also should be noted that the first vehicle may be a device with connected functions within the first range, such as other vehicles in the first range (receiving vehicles), third-party devices around the first vehicle, such as: Road Side Unit (RSU), roadside infrastructure, cloud platform servers, multi-access mobile edge computing (Multi-access Mobile Edge Computing (MEC) server, etc. Among them, the first range is related to the first vehicle, for example: within 50m centered on the first vehicle; or a range related to the business scenario in which the first vehicle is located, for example, when the first vehicle exits the highway, the first range may be the range between the highway exit and the location of the first vehicle, and for example, when the first vehicle requests to change lanes, the first range may be the gap between two vehicles in adjacent lanes that can change lanes safely.

according to the information transmission method in the present disclosure, the first vehicle sends a first message including the passing priority level and /or first information related to the passing priority level to the V2X device, it is able to enable the V2X device to make decisions based on the passing priority level of the first vehicle, thereby avoiding the game of vehicles with the same passing priority, solving the problem that vehicles with lower passing priority cannot complete driving tasks for a long time, and thus improving the user's driving experience.

Optionally, the first vehicle may send the first message by any one of broadcast, unicast and multicast methods; the embodiment of the present disclosure does not specifically limit the sending method of the first message.

Optionally, the sending a first message to a V2X device in step 101 includes:
when the first vehicle requires a vehicle collaboration, sending the first message to the V2X device.

That is to say, in this embodiment, when the first vehicle determines that it needs cooperation from other vehicles, such as changing lanes or merging into an intersection in the current path planning, the first vehicle sends the first message to the V2X device, so that the V2X device can determine the passing priority level of the first vehicle based on the first message, and thus make a collaborative decision based on the passing priority level of the first vehicle, so that other vehicles can assist the first vehicle in completing the service that requires collaboration.

Optionally, the sending the first message to the V2X device in step 101, including any of the following:
when sending the collaboration request, sending the first message to the V2X device;
before sending the collaboration request, sending the first message to the V2X device;
after sending the collaboration request, sending the first message to the V2X device.

That is to say, when the first vehicle needs vehicle coordination, the first vehicle may send a coordination request and a first message at the same time; or it may send the first message first and then send a coordination request; or it may send a coordination request first and then send the first message, that is, there is no time sequence relationship between the timing and order of sending the coordination request and the first message.

Optionally manner, the first information includes at least one of the following:
a vehicle type of the first vehicle;
information related to collaboration request;
identity information of the V2X device.

In this optional implementation, vehicle types may include, for example: special vehicles (ambulances, fire trucks, police cars, etc.), public vehicles (buses, shuttle buses, etc.), special vehicles (such as sanitation vehicles, road maintenance vehicles, engineering operations, and other special operation vehicles), ordinary vehicles (such as passenger cars, taxis), etc.

Here, it should be noted that since the V2X device (receiving device) receiving the first message can be a unique V2X device or a non- unique V2X device, if it is a unique V2X device, the first message should contain the identity information of the recipient, and if it is a non- unique receiving device, the first message can contain the identity information of all recipients within a certain range, where when collaboration is required, all vehicles within the collaborative road range should be receiving devices. Therefore, the V2X device in the embodiment of the present disclosure includes at least one second vehicle and/or third-party device with connected function. In this way, the optimal traffic decision can be achieved through communication between the first vehicle and the V2X device. Furthermore, the V2X device also supports the collaboration function, so that when the first vehicle needs to collaborate, the V2X device can assist the first vehicle in completing the operation corresponding to the collaboration request.

On this basis, a possible implementation manner is: before sending the first message to the V2X device in step 101, the method further includes:
according to a communication process with at least one communication device around the first vehicle, determining the second vehicle and/or the third-party device in the at least one communication device.

That is to say, the first vehicle can communicate with surrounding communication devices and select a V2X device with connected vehicle functions from among these communication devices, or select a V2X device with connected vehicle functions and collaboration functions, thereby sending the first message to the determined V2X device.

On this basis, another possible implementation method is: the first vehicle does not need to predetermine the V2X device, but the first vehicle directly sends a first message to the communication devices around it, and the communication device that can receive the first message is the V2X device in the embodiment of the present disclosure. In this possible implementation method, the first message may not carry the identity information of the V2X device.

As a specific implementation manner, the information related to the collaboration request includes at least one of the following:
waiting time of the collaboration request, which is the time interval Δt between the first collaboration request and the current collaboration request, etc.
a number of times the collaboration request was rejected; the number of times the collaboration request was rejected is the number of times other vehicles' reported rejections, etc.;
a purpose of the collaboration request; for example, the purpose of the collaboration request includes refueling, charging, an accident ahead in the lane, road construction ahead, etc.;
a relationship between the path planning and the cooperation request; for example, the relationship between the path planning and the cooperation request may be whether the cooperation is initiated according to the path planning requirements, and specifically, when the first vehicle needs to change lanes in a coordinated manner, whether the lane change request is the only path in the path planning, that is, whether the lane change is required;
a location where the collaboration request is initiated; the location where the collaboration request is initiated may be, for example, the distance between the first vehicle and the exit, the lane where the first vehicle is located, etc. Based on the location where the collaboration request is initiated, the impact of the failure of the collaboration request on the overall traffic efficiency may be determined;
abnormal conditions of the vehicle, such as vehicle failure, vehicle loss of control, etc.

Here, it should be noted that the V2X device can determine the passing priority of the first vehicle based on the information related to the collaboration request, and specifically can determine the passing priority of the first vehicle based on the mapping relationship between the pre-configured passing priority level and the content in the first information (such as Table 2 configured below); among which, as a specific example, if multiple items in Table 2 are met at the same time, the highest passing priority level can be selected.

**Table 2 Correspondence between information related to collaboration request and passing priority level**

| right-of-way level | Vehicle Type | information related to the collaboration request (one of the following will suffice) | | | | | |
|---|---|---|---|---|---|---|---|
| | | Waiting time | Number of rejections | Purpose of request | Relationship with path planning | Request origin location | Abnormal situations |
| Level 1 | Special vehicles | - | - | - | - | - | yes |
| Level 2 | Ordinary vehicles | Δ T >6 0 s | ≥6 | Oil/Electricity <20% | The only path | 100m from intersection | no |
| Level 3 | Ordinary vehicles | Δ T > 40 s | [4,6) | Oil/Electricity <40% | Not unique, large time/distance difference | 300m from intersection | no |
| Level 4 | Ordinary vehicles | Δ T > 20 s | [ 2,4) | Oil/Electricity <60% | Not unique, with time/distance difference | 500m from intersection | no |
| Level 5 | Ordinary vehicles | Δ T <20s | ≤ 2 times | Oil/power > 60 % | Non-unique, no time/distance difference | Distance to intersection >500m | no |

Combined with Table 2, it can be seen that if the vehicle type is a special vehicle, or the abnormal situation of the vehicle is an abnormality, the vehicle has high passing priority. When such a vehicle initiates a collaboration request or periodically sends a first message, other vehicles should yield; if the vehicle classification is an ordinary vehicle, its priority level must be determined based on the level corresponding to the relevant information of its collaboration request.

Here, it should be noted that Table 2 is an example of a mapping relationship between the passing priority level and the content in the first information. In actual applications, the mapping relationship can be configured based on specific needs, and the embodiment of the present disclosure does not make any specific limitation.

Optionally, subsequent to the sending a first message to the V2X device when the first vehicle requires vehicle collaboration, the method further includes:
receive a passing priority strategy sent by the V2X device, where the passing priority strategy includes at least one of the following: approval; rejection; second information representing approval; third information representing rejection.

Here, it should be noted that the V2X device can determine the passing strategy based on the received first message and send the passing strategy to the first vehicle. Specifically, when the first message includes the passing priority level, the V2X device can directly determine the passing strategy based on the passing priority level of the first vehicle. When the first message includes the first information, the V2X device can determine the passing priority level corresponding to the first information based on the above Table 2, and determine the passing strategy based on the determined passing priority level.

Specifically, the V2X device can determine the coordination strategy based on the following Table 3, and further determine the passing priority strategy based on the coordination strategy.

**Table 3**

| passing priority level for the first vehicle | Collaborative strategies for connected car devices |
|---|---|
| Level 1 | Shall agree |
| Level 2 /3 | Should agree |
| Rating 4/5 | May agree |

Among them, shall agree means must agree, that is, if the priority level of the first vehicle is 1, the recipient must agree to the collaboration; should agree and may agree represent that it can be rejected. When determining that the collaboration strategy is should agree or may agree, the passing priority strategy can be determined based on the passing priority level of the first vehicle and the passing priority level of the second vehicle, where the second vehicle is a vehicle that assists the first vehicle to complete the operation corresponding to the collaboration request, specifically including the following situations:
(1) The passing priority level of the first vehicle is level 2 or level 3. By looking up Table 3, it can be seen that the collaborative strategy is recommended to agree, indicating that the first vehicle's demand is more urgent. At this time, if the passing priority level of the second vehicle (receiver) is higher than the passing priority level of the first vehicle (sender), it means that the second vehicle is more urgent, and the second vehicle determines "reject". On the contrary, if the passing priority level of the second vehicle (receiver) is less than or equal to the passing priority level of the first vehicle (sender), the second vehicle determines "agree" at this time;
(2) The passing priority level of the first vehicle is level 4 or level 5. By looking up Table 3, it can be seen that the collaborative strategy is may agree, indicating that the demand of the first vehicle is not urgent. In this case, it can be: by default, regardless of whether the passing priority level of the second vehicle (receiver) is higher than the passing priority level of the first vehicle (sender), the second vehicle does not agree. Alternatively, based on other external factors such as the current road congestion situation and the condition of the second vehicle itself (battery level/fuel quantity), the second vehicle determines whether to agree based on the principle of safety and efficiency first.

Here, it should also be noted that the second information and the third information can be information related to the cooperation request of the first vehicle. For example, if the cooperation request is to change lanes, the second information can be "request change lanes" or "request change lanes at a certain time", etc.; the third information can be "request drive along the current road", etc.

Further, as an optional implementation, subsequent to the receiving the passing priority strategy sent by the V2X device, the method further includes:
sending a second message to the V2X device, where the second message includes at least one of the following:
indication information, configured to indicate that the passing priority strategy is received by the first vehicle;
an action that the first vehicle is about to perform.

That is to say, after receiving the passing priority strategy, the first vehicle can send a response message to the V2X device to inform the V2X device that the communication strategy has been successfully received, where the second message may further include the action that the first vehicle is about to perform. For example, if the first vehicle's collaboration request is to change lanes and the passing priority strategy is to agree or the second information, then the action that the first vehicle is about to perform is the lane change operation corresponding to the collaboration request; if the first vehicle's collaboration request is to change lanes and the passing priority strategy is to reject or the third information, then the action that the first vehicle is about to perform is to continue driving along the current road.

Of course, after receiving the passing policy, the first vehicle may not send a response message to the V2X device, but may perform corresponding operations based on the passing policy. For example, if the passing policy is approval and/or the second information, the operation corresponding to the collaboration request is performed; if the passing policy is rejection and/or the third information, the first message is updated and sent, or the sending of the first message is stopped.

Optionally, the method further includes: when the passing priority strategy is consent and/or the second information, the first vehicle performs an operation corresponding to the cooperation request. Similarly, the second vehicle also performs a corresponding operation based on the passing priority strategy, such as: the cooperation request of the first vehicle is to change lanes, the second vehicle is located in the target lane of the first vehicle and is located behind the first vehicle, then the action to be performed by the first vehicle is to change lanes to the target lane, and the action to be performed by the second vehicle is to slow down.

Further, as an optional implementation, subsequent to the receiving the passing priority strategy sent by the V2X device, the method further includes:
in a case that the passing priority strategy includes rejection and/or the third information, performing any one of the following operations:
sending updated first message;
stopping sending the first message.

That is to say, in the event that the current collaboration request fails, the first vehicle can regenerate the first message based on the current situation and send the updated first message; or, the first vehicle continues to drive according to the current status and no longer makes a collaboration request.

As a specific implementation manner, the sending of the updated first message includes:
sending the updated first message at a first time, where the first time is spaced from the current time by a first duration.

That is, when the first vehicle receives a passing priority strategy of rejection and/or the third information, that is, when the current collaboration request fails, the first vehicle can immediately update the first message according to the current situation, and then send the updated first message after the first time interval, or the first vehicle updates the first message according to the current situation after the first time interval, and immediately sends the updated first message. That is, the embodiment of the present disclosure does not limit the timing of sending the updated first message, which can be determined according to actual needs.

Furthermore, as an optional implementation, prior to the sending the updated first message, the method further includes:
determining a V2X device for receiving the updated first message;
the sending the updated first message includes:
sending the updated first message to the V2X device for receiving the updated first message.

That is to say, as each vehicle driving, the V2X device that assists the first vehicle in completing the corresponding operation of the collaboration request will change. Therefore, before sending the updated first message, it is necessary to first determine the V2X device that receives the updated first message.

In short, in the event that the current collaboration request fails, the V2X device that collaborates with the first vehicle can be determined based on the real-time situation of the first vehicle, the content in the first message can be updated, and the sending time of the first message and/or the collaboration request can be updated, so that the updated first message can be sent to the currently determined V2X device at the currently determined sending time, thereby enabling the V2X device to collaborate with the first vehicle based on the first message.

In the information transmission method of the disclosed embodiment, a first vehicle sends a first message to a V2X device, and the V2X device specifies a communication strategy related to the first vehicle based on the first message. In this way, clear collaboration rules are formulated for different collaboration requests, reducing the game-playing difficulties of vehicles in the decision-making process. By updating the first message, different collaboration rules are formulated based on different stages of the collaboration request, ensuring that more urgent collaboration situations can be quickly coordinated, thereby improving user experience.

As shown in FIG. 2, the embodiment of the present disclosure further provides an information transmission method, which is applied to a V2X device, and the method includes:
Step 202: receiving a first message sent by a first vehicle, where the first message includes a passing priority level and/or first information related to the passing priority level.

Here, it should be noted that the V2X equipment includes a second vehicle and/or a third-party device, where the second vehicle is a vehicle that assists the first vehicle in passing, and the third-party device can be an RSU, roadside infrastructure, a cloud platform server, an MEC server, etc.

According to the embodiment of the present disclosure, V2X device receives the first message sent by the first vehicle, and can assist the first vehicle in passing according to the first message. In this way, the game problem of vehicles with the same passing priority is avoided, and the problem of vehicles with lower passing priority being unable to complete driving tasks for a long time is solved, thereby improving the user's driving experience.

Here, it should be noted that the first vehicle may periodically send the first message. For example, a special vehicle (ambulance, fire truck, etc.) may periodically send the first message while performing a task. When the V2X device receives the first message, it directly assists the first vehicle in passing based on the first message. Specifically, for example, the V2X device is the second vehicle located in front of the first vehicle. When the second vehicle receives the first message, it performs operations such as lane change to ensure the smooth passing of the road currently driven by the first vehicle, so that the first vehicle can pass as soon as possible. In other words, when the first vehicle periodically sends the first message, the V2X device performs the operation of assisting the first vehicle in passing according to the first message. If the V2X device is a third-party device, the V2X device needs to communicate with the vehicle that assists the first vehicle in passing to ensure the safe and fast passing of the first vehicle.

Here, it should also be noted that the first vehicle may send the first message when vehicle collaboration is required; specifically, the first message may be sent before sending the collaboration request, or the collaboration request and the first message may be sent at the same time.

Optionally manner, the first information includes at least one of the following:
a vehicle type of the first vehicle;
information related to collaboration request;
identity information of the V2X device.

Specifically, the information related to the collaboration request includes at least one of the following:
waiting time for collaboration request;
a number of rejected collaboration request;
a purpose of coordination request;
a relationship between path planning and collaboration request;
a location where a collaboration request is initiated;
abnormal condition of vehicle.

Here, when it is necessary to explain, the specific description of the information included in the first message can be found in the description of the aforementioned information transmission method applied to the first vehicle, and will not be repeated here.

Optionally, the V2X device has a connected function and supports a collaboration function; the method further includes:
According to the first message, a passing priority strategy is sent to the first vehicle, where the passing priority strategy includes at least one of approval, rejection, second information representing approval, third information representing rejection.

That is to say, when the first vehicle sends the first message when vehicle collaboration is required, the V2X device, after receiving the first message, also sends a passing priority strategy to the first vehicle based on the first message to inform the first vehicle whether the collaboration request is successful.

Specifically, after receiving the first message, the V2X device first determines the passing priority level of the first vehicle according to the first message. Specifically, when the first message includes the passing priority level, the passing priority level of the first vehicle can be directly obtained. When the first vehicle includes the first information, the passing priority level corresponding to the first information is determined according to the aforementioned Table 2; then, according to the aforementioned Table 3, the collaborative strategy corresponding to the passing priority level of the first vehicle is determined, and finally, the passing priority strategy is determined according to the collaborative strategy. Among them, when the collaborative strategy is the level 1 corresponding to the consent, the passing priority strategy is consent. When the collaborative strategy is appropriate to should agree or may agree, it can be determined whether to agree to pass according to the passing priority level of the second vehicle assisting the first vehicle and the passing priority level of the first vehicle. For example: when the first vehicle's passing priority is higher than the second vehicle's passing priority, the passing priority strategy is determined to be consent/second information.

Furthermore, as an optional implementation, the method further includes:
in a case that the V2X device is a third-party device and the passing priority strategy includes the approval and/or the second information, a third message is sent to the second vehicle to enable the second vehicle to assist the first vehicle in passing according to the third message.

That is to say, when the V2X device is a third-party device, when the third-party device determines that it needs to assist the first vehicle to pass, it will send a third message to the second vehicle assisting the first vehicle to assist the first vehicle to pass, where the third message includes collaborative suggestions, collaborative instructions, collaborative commands, collaborative messages, etc.

Furthermore, as an optional implementation, the method further includes:
in a case that first messages sent by a plurality of the first vehicles are received, determining the passing priority level of each corresponding first vehicle according to each of the first messages;
according to a preset rule, sorting the passing priority level of each of the first vehicles;
The sending a passing priority strategy to the first vehicle according to the first message includes:
   according to the arrangement order of the passing priority levels of each of the first vehicles, the corresponding passing priority strategy are sent to each of the first vehicles in turn.

That is to say, when the V2X device receives collaboration requests from multiple first vehicles, it can assist each first vehicle in passing in turn based on the level of the passing priority of each first vehicle. Optionally, first vehicles with higher levels of passing priority should be assisted first.

As a specific implementation manner, prior to the sending the passing priority strategy to the first vehicle according to the first message, the method further includes:
determining a passing priority level of the first vehicle according to the first message;
determining a passing priority level of a third vehicle, the third vehicle being a vehicle assisting the first vehicle in passing;

The passing priority strategy is determined according to the passing priority level of the first vehicle and/or the passing priority level of the third vehicle.

That is to say, when determining the passing priority strategy, a decision can be made based on the passing priority levels of the first vehicle and the third vehicle assisting the first vehicle in passing. For example, when the passing priority level of the first vehicle is higher than that of the third vehicle, the passing priority strategy is approval; when the passing priority level of the first vehicle is lower than that of the third vehicle, the passing priority strategy is rejection; when the passing priority level of the first vehicle is the same as that of the third vehicle, the passing priority strategy decision can be made considering the road condition information around the first vehicle.

Here, it should be noted that when the V2X device is a vehicle, the third vehicle in this specific implementation is the V2X device.

The following describes the implementation process of the information transmission method according to the embodiment of the present disclosure in combination with specific examples:

### Example 1: The first vehicle sends a passing priority level and requests the second vehicle to cooperate

Vehicle A (the first vehicle) is an ordinary vehicle. According to the route planning, it should exit the current highway at the exit ahead. The current distance to the highway exit is 1 km. Vehicle A initiates a lane change request, and the passing priority level in the request is set to level 5. After receiving the request from vehicle A, vehicle B (the second vehicle) sends a request to reject the cooperation. While driving forward, vehicle A continues to send lane change requests to other vehicles until the distance to the exit is less than 100 m. The passing priority level of vehicle A meets the condition of level 1. After receiving the lane change request from vehicle A, vehicle D (the second vehicle) decides to agree to the cooperation request. Vehicle A and vehicle D interact in the subsequent cooperation process.

### Example 2: The first vehicle sends a first message related to the passing priority level to request the second vehicle to cooperate

Vehicle A (the first vehicle) is an ordinary vehicle. According to the path planning, vehicle A should exit the current highway at the exit ahead. The current distance from the highway exit is 500 m. Vehicle A sends a lane change request and related information of the collaboration request, such as the request waiting time of 10 s, the number of rejections of 6 times, and the initiation location of the request of 500 m. After receiving the request information from vehicle A, vehicle B (the second vehicle) determines that the passing priority level of vehicle A is level 2, and the passing priority strategy formulated is consent.

### Example 3: The first vehicle sends the passing priority level, and the third-party device formulates the passing priority strategy

Vehicle A (the first vehicle) is an ordinary vehicle. It sends a cooperative lane change request at a distance of 500 m from the highway exit, and the passing priority level is level 4. After receiving the request from vehicle A, the RSU (third-party device) determines that the request from vehicle A is not urgent, does not send cooperative information to other vehicles, and sends a rejection of cooperation information to vehicle A. Vehicle A continues to move forward and still keeps sending cooperative lane change request information. When vehicle A is less than 100 m away from the highway exit, the RSU determines that the request from vehicle A is urgent, and sends a cooperative command/suggestion/message to other vehicle B, such as acceleration/deceleration. Vehicle B adjusts its speed according to the instructions of the RSU and cooperates with vehicle A to complete the lane change and exit the highway.

### Example 4: The first vehicle sends the passing priority level, and the third-party device formulates the passing priority strategy

Vehicles A and B are ordinary vehicles. According to the route planning, vehicle A is driving on the main road, 500 m away from the exit ahead, and vehicle B is driving on the ramp, 100 m away from the entrance ahead. RSU (third-party equipment) is responsible for formulating the passing priority strategy. RSU receives the cooperation request from vehicles A and B, as well as the specific cooperation request information. RSU determines that the traffic priority level of vehicle B is level 2 and that of vehicle A is level 4. Vehicle B has a higher priority level, so RSU prioritizes vehicle B's cooperative entry request. After completing the cooperation, it processes vehicle A 's cooperative lane change request.

As shown in FIG.3, an embodiment of the present disclosure provides an information transmission device, which is applied to a first vehicle, and the device includes:
a first sending module 301, configured to send a first message to a V2X device, where the first message includes at least one of the following:
passing priority level;
first information related to the passing priority level.

According to the embodiment of the present disclosure, the first sending module 301 sends a first message including a passing priority level and/or first information related to the passing priority level to the V2X device, so that the V2X device can make a decision based on the passing priority level of the first vehicle, thereby avoiding the game problem of vehicles with the same passing priority and solving the problem that vehicles with lower passing priority cannot complete driving tasks for a long time, thereby improving the user's driving experience.

Optionally, the first sending module 301 is specifically configured to:
when the first vehicle requires vehicle collaboration, send the first message to the V2X device.

Optionally, the first information includes at least one of the following:
a vehicle type of the first vehicle;
information related to collaboration request;
identity information of the V2X device.

Optionally, the information related to the collaboration request includes at least one of the following:
waiting time for collaboration request;
a number of rejected collaboration request;
a purpose of coordination request;
a relationship between path planning and collaboration request;
a location where a collaboration request is initiated;
abnormal condition of vehicle.

Furthermore, the device also includes:
a receiving module, configured to receive a passing priority strategy sent by the V2X device after the first sending module 301 sends a first message to the V2X device when the first vehicle requires vehicle collaboration, where the passing priority strategy includes at least one of the following: approval; rejection; second information representing approval; third information representing rejection.

Furthermore, the device further includes:
a second sending module, configured to send a second message to the V2X device after the receiving module receives the passing priority strategy sent by the V2X device, where the second message includes at least one of the following:
indication information, configured to indicate that the passing priority strategy is received by the first vehicle;
an action that the first vehicle is about to perform.

Furthermore, the device further includes:
an execution module, configured to, when the passing priority strategy includes rejection and /or the third information, perform any of the following operations:
sending updated first message;
stopping sending the first message.

Optionally, when the execution module is used to send the updated first message, it is specifically used to: send the updated first message at a first moment, and the first moment is spaced from the current moment by a first duration.

Optionally, the device further includes:
a determination module, configured to determine a V2X device for receiving the updated first message before the execution module sends the updated first message;
when the execution module is used to send the updated first message, it is specifically used to: send the updated first message to the V2X device used to receive the updated first message.

As shown in FIG. 4, the embodiment of the present disclosure further provides an information transmission device, which is applied to a V2X device, including:
a receiving module 401, configured to receive a first message sent by a first vehicle, where the first message includes a passing priority level and/or first information related to the passing priority level.

According to the embodiment of the present disclosure, the receiving module 401 receives the first message sent by the first vehicle, so that the information transmission device can assist the first vehicle in passing according to the first message. In this way, the game problem of vehicles with the same passing priority is yielded, and the problem that vehicles with lower passing priority cannot complete the driving task for a long time is solved, thereby improving the driving experience of users.

Optionally, the first information includes at least one of the following:
a vehicle type of the first vehicle;
information related to collaboration request;
identity information of the V2X device.

Optionally, the information related to the collaboration request includes at least one of the following:
waiting time for collaboration request;
a number of rejected collaboration request;
a purpose of coordination request;
a relationship between path planning and collaboration request;
a location where a collaboration request is initiated;
abnormal condition of vehicle.

Optionally, the V2X device has a connected function and supports a collaboration function; the device further includes:
a first sending module, configured to send a passing priority strategy to the first vehicle according to the first message, where the passing priority strategy includes at least one of approval, rejection, second information representing approval, third information representing rejection.

Optionally, the device further includes:
a second sending module, configured to send a third message to the second vehicle when the V2X device is a third-party device and the passing priority strategy includes the approval and/or the second information, to enable the second vehicle to assist the first vehicle in passing according to the third message.

Optionally, the device further includes:
a first determination module, configured to determine the passing priority level of each corresponding first vehicle according to each first message when receiving the first message sent by the plurality of first vehicles;
a processing module, configured to store the passing priority levels of each of the first vehicles according to a preset rule;

On this basis, the first sending module is specifically used to send the corresponding passing priority strategy to each of the first vehicles in sequence according to the arrangement order of the traffic right level of each of the first vehicles.

Optionally, the device further includes:
a second determination module, configured to determine a passing priority level of the first vehicle according to the first message;
a third determination module, configured to determine the passing priority level of a third vehicle, where the third vehicle is a vehicle that assists the first vehicle in passing;
a fourth determination module, configured to determine the passing priority strategy according to the passing priority level of the first vehicle and/or the passing priority level of the third vehicle.

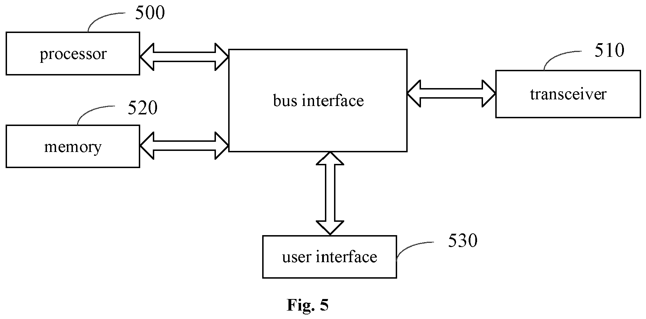

As shown in Fig. 5, the embodiment of the present disclosure also provides a vehicle, including: a transceiver 510, a processor 500, a memory 520, and a program or instruction stored in the memory 520 and executable on the processor 500; when the processor executes the program or instruction, the various processes of the information transmission method embodiment applied to the first vehicle as described above are implemented, and the same technical effect can be achieved. In order to avoid repetition, it will not be repeated here.

The transceiver 510 is used to receive and send data under the control of the processor 500.

**In** Fig. 5, the bus architecture may include any number of interconnected buses and bridges, specifically one or more processors represented by processor 500 and various circuits of memory represented by memory 520 are connected together. The bus architecture can also connect various other circuits such as peripherals, regulators, and power management circuits, which are well known in the art and are therefore not further described herein. The bus interface provides an interface. The transceiver 510 can be a plurality of components, namely, a transmitter and a receiver, providing a unit for communicating with various other devices on a transmission medium. For different devices, the user interface 530 can also be an interface that can be connected to the required devices externally or internally, and the connected devices include but are not limited to a keypad, a display, a speaker, a microphone, a joystick, etc.

The processor 500 is responsible for managing the bus architecture and general processing, and the memory 520 can store data used by the processor 500 when performing operations.

The disclosed embodiment also provides a V2X device, including a transceiver, a memory, a processor, and a program or instruction stored in the memory and running on the processor. When the processor executes the program or instruction, each process of the information transmission method embodiment applied to the V2X device as described above is implemented, and the same technical effect can be achieved. In order to avoid repetition, it will not be described here.

Here, it should be noted that the structure of the V2X device is similar to the structure of the vehicle, and therefore, the structure of the V2X device can refer to FIG. 5.

Those skilled in the art will understand that all or part of the steps to implement the above embodiments may be accomplished by hardware, or may be accomplished by instructing related hardware through programs or instructions, where the programs or instructions include programs or instructions for executing part or all of the steps of the above methods; and the program may be stored in a readable storage medium, which may be any form of storage medium.

In addition, the embodiment of the present disclosure further provides a readable storage medium, on which a program is stored, and when the program is executed by the processor, each process of the information transmission method embodiment applied to the first vehicle as described above, or each process of the information transmission method embodiment applied to the V2X device as described above, can achieve the same technical effect, and will not be repeated here to avoid repetition. The computer-readable storage medium is, for example, a read-only memory (ROM), a random access memory (RAM), a magnetic disk or an optical disk, etc.

In addition, it should be pointed out that in the apparatus and method of the present disclosure, it is obvious that each component or each step can be decomposed and / or recombined. These decompositions and / or recombinations should be regarded as equivalent schemes of the present disclosure. Moreover, the steps of performing the above-mentioned series of processing can naturally be performed in the order of description or in chronological order, but it is not necessary to perform them in chronological order, and some steps can be performed in parallel or independently of each other. For those of ordinary skill in the art, it can be understood that all or any steps or components of the method and apparatus of the present disclosure can be implemented in any computing device (including processors, storage media, etc.) or a network of computing devices in hardware, firmware, software or a combination thereof, which can be achieved by those of ordinary skill in the art using their basic programming skills after reading the description of the present disclosure.

Therefore, the purpose of the present disclosure can also be achieved by running a program or a group of programs on any computing device. The computing device can be a well-known general-purpose device. Therefore, the purpose of the present disclosure can also be achieved by running a program or a group of programs on any computing device. The present disclosure can be realized by only providing a program product containing a program code for realizing the method or device. That is to say, such a program product also constitutes the present disclosure, and a storage medium storing such a program product can also constitute the present disclosure. Obviously, the storage medium can be any known storage medium or any storage medium developed in the future.

It should be noted that it should be understood that the division of the above modules is only a division of logical functions. In actual implementation, they can be fully or partially integrated into one physical entity, or they can be physically separated. And these modules can all be implemented in the form of software called by processing elements; they can also be all implemented in the form of hardware; some modules can also be implemented in the form of software called by processing elements, and some modules can be implemented in the form of hardware. For example, the determination module can be a separately established processing element, or it can be integrated in a chip of the above-mentioned device. In addition, it can also be stored in the memory of the above-mentioned device in the form of program code, and called and executed by a processing element of the above-mentioned device. The implementation of other modules is similar. In addition, these modules can be fully or partially integrated together, or they can be implemented independently. The processing element described here can be an integrated circuit with signal processing capabilities. In the implementation process, each step of the above method or each module above can be completed by an integrated logic circuit of hardware in the processor element or instructions in the form of software.

For example, each module, unit, sub-unit or sub-module may be one or more integrated circuits configured to implement the above method, such as one or more application specific integrated circuits (ASIC), or one or more microprocessors (DSP), or one or more field programmable gate arrays (FPGA). For another example, when a module above is implemented in the form of a processing element scheduling program code, the processing element may be a general-purpose processor, such as a central processing unit (CPU) or other processor that can call program code. For another example, these modules may be integrated together and implemented in the form of a system-on-a-chip (SOC).

The terms "first" and "second" in the present disclosure are used to distinguish similar objects, and are not necessarily used to describe a specific order or sequence. It should be understood that the data used in this way can be interchanged in appropriate circumstances, so that the embodiments of the present disclosure described here, such as the order implementation except those illustrated or described here. In addition, the terms "including" and "having" and any of their variations are intended to cover non-exclusive inclusions, such as, the process, method, system, product or equipment including a series of steps or units need not be limited to those steps or units clearly listed, but may include other steps or units that are not clearly listed or inherent to these processes, methods, products or equipment. In addition, "and / or" is used in the specification and claims to represent at least one of the connected objects, such as A and / or B and / or C, indicating that it includes 7 situations of single A, single B, single C, and A and B all exist, B and C all exist, A and C all exist, and A, B and C all exist. Similarly, the use of " at least one of A and B " in this specification and claims should be understood as " A alone, B alone, or both A and B are present."

Finally, it should be noted that, in this article, relational terms such as first and second, etc. are only used to distinguish one entity or operation from another entity or operation, and do not necessarily require or imply any such actual relationship or order between these entities or operations. Moreover, the terms "include", "include" or any other variants thereof are intended to cover non-exclusive inclusion, so that a process, method, article or terminal device including a series of elements includes not only those elements, but also other elements not explicitly listed, or also includes elements inherent to such process, method, article or device. In the absence of further restrictions, the elements defined by the sentence "include a..." do not exclude the existence of other identical elements in the process, method, article or device including the elements.

The above are optional implementations of the present disclosure. It should be pointed out that for ordinary technicians in this technical field, several improvements and modifications can be made without departing from the principles described in the present disclosure. These improvements and modifications should also be regarded as the scope of protection of the present disclosure.

## Claims

1. An information transmission method, applied to a first vehicle, comprising:
sending a first message to a V2X device, wherein the first message comprises at least one of the following:
a passing priority level;
first information related to the passing priority level.

2. The method according to claim 1, wherein the sending the first message to the V2X device comprises:
when the first vehicle requires a vehicle collaboration, sending the first message to the V2X device.

3. The method according to claim 1 or 2, wherein the first information comprises at least one of the following:
a vehicle type of the first vehicle;
information related to collaboration request;
identity information of the V2X device.

4. The method according to claim 3, wherein the information related to the collaboration request comprises at least one of the following:
waiting time for collaboration request;
a number of rejected collaboration request;
a purpose of coordination request;
a relationship between path planning and collaboration request;
a location where a collaboration request is initiated;
abnormal condition of vehicle.

5. The method according to claim 2, wherein subsequent to the sending the first message to the V2X device when the first vehicle requires vehicle collaboration, the method further comprises:
receiving a passing priority strategy sent by the V2X device, wherein the passing priority strategy comprises at least one of the following:
an approval;
a rejection;
second information representing approval;
third information representing rejection.

6. The method according to claim 5, wherein subsequent to the receiving the passing priority strategy sent by the V2X device, the method further comprises:
sending a second message to the V2X device, wherein the second message comprises at least one of the following:
indication information, configured to indicate that the passing priority strategy is received by the first vehicle;
an action that the first vehicle is about to perform.

7. The method according to claim 5, wherein subsequent to the receiving the passing priority strategy sent by the V2X device, the method further comprises:
in a case that the passing priority strategy comprises the rejection and/or the third information, performing any one of the following operations:
sending updated first message;
stopping sending the first message.

8. The method according to claim 7, wherein the sending the updated first message comprises:
sending the updated first message at a first time, wherein the first time is spaced from a current time by a first duration.

9. The method according to claim 7 or 8, wherein prior to the sending the updated first message, the method further comprises:
determining the V2X device for receiving the updated first message;
the sending the updated first message comprises:
sending the updated first message to the V2X device for receiving the updated first message.

10. An information transmission method, applied to a V2X device, comprising:
receiving a first message sent by a first vehicle, wherein the first message comprises a passing priority level and/or first information related to the passing priority level.

11. The method according to claim 10, wherein the first information comprises at least one of the following:
a vehicle type of the first vehicle;
information related to collaboration request;
identity information of the V2X device.

12. The method according to claim 11, wherein the information related to the collaboration request comprises at least one of the following:
waiting time for collaboration request;
a number of rejected collaboration request;
a purpose of coordination request;
a relationship between path planning and collaboration request;
a location where a collaboration request is initiated;
abnormal condition of vehicle.

13. The method according to claim 10, wherein the V2X device has a connected function and supports a collaboration function, the method further comprises:
sending a passing priority strategy to the first vehicle according to the first message, wherein the passing priority strategy comprises at least one of an approval, a rejection, second information representing approval, third information representing rejection.

14. The method according to claim 13, further comprising:
in a case that the V2X device is a third-party device and the passing priority strategy comprises the approval and/or the second information, sending a third message to a second vehicle to enable the second vehicle to assist the first vehicle in passing according to the third message.

15. The method according to claim 13, further comprising:
in a case that the first messages sent by a plurality of the first vehicles are received, determining the passing priority level of each corresponding first vehicle according to each of the first messages;
sorting the passing priority levels of the first vehicles according to a preset rule;
the sending the passing priority strategy to the first vehicle according to the first message comprises:
sending the corresponding passing priority strategy to each of the first vehicles in turn, according to an arrangement order of the passing priority levels of the first vehicles.

16. The method according to claim 13, wherein prior to the sending the passing priority strategy to the first vehicle according to the first message, the method further comprises:
determining the passing priority level of the first vehicle according to the first message;
determining a passing priority level of a third vehicle, the third vehicle being a vehicle assisting the first vehicle in passing;
determining the passing priority strategy according to the passing priority level of the first vehicle and/or the passing priority level of the third vehicle.

17. A vehicle, comprising a transceiver, a memory, a processor, and a program or instruction stored in the memory and running on the processor, wherein the processor executes the program or instruction to perform the information transmission method according to any one of claims 1 to 9.

18. A V2X device, comprising a transceiver, a memory, a processor, and a program or instruction stored in the memory and running on the processor, wherein the processor executes the program or instruction to perform the information transmission method according to any one of claims 10 to 16.

19. An information transmission apparatus, applied to a first vehicle, comprising:
a sending module, configured to send a first message to a V2X device, wherein the first message comprises at least one of the following:
a passing priority level;
first information related to the passing priority level.

20. An information transmission apparatus, applied to a V2X device, comprising:
a receiving module, configured to receive a first message sent by a first vehicle, wherein the first message comprises a passing priority level and/or first information related to the passing priority level.

21. A readable storage medium, storing a program, wherein when the program is executed by a processor to perform the information transmission method according to any one of claims 1 to 9 or the information transmission method according to any one of claims 10 to 16.
